# EUROPEAN PATENT SPECIFICATION

(11) **EP 2 331 849 B1**
(45) Date of publication and mention of the grant of the patent: **31.07.2013**
(21) Application number: 09811777.3
(22) Date of filing: 03.09.2009
(51) Int. Cl.: F16H 61/70, B60W 10/06, B60W 30/192, B60W 30/194

(54) **METHOD AND COMPUTER PROGRAMME PRODUCT FOR IMPROVING PERFORMANCE OF A MOTOR VEHICLE**
VERFAHREN UND COMPUTERPROGRAMMPRODUKT ZUR VERBESSERUNG DER LEISTUNG EINES KRAFTFAHRZEUGES
PROCÉDÉ ET PRODUIT PROGRAMME INFORMATIQUE PERMETTANT D'AMÉLIORER LA PERFORMANCE D'UN VÉHICULE À MOTEUR

(30) Priority: 08.09.2008 SE 0801922
(43) Date of publication of application: 15.06.2011
(73) Proprietor: Scania CV AB (PUBL), 151 87 Södertälje (SE)
(72) Inventor: LIWELL, Mats, S-152 51 Södertälje (SE)
(86) International application number: PCT/SE2009/050994
(87) International publication number: WO 2010/027321

(56) References cited:
- EP-A2- 1 101 980
- EP-A2- 1 172 588
- WO-A1-2004/079233
- JP-A- 62 218 245
- JP-A- 2005 180 374
- JP-A- 2009 138 895
- US-A- 6 128 974
- US-A1- 2004 065 091
- US-A1- 2004 092 364
- US-A1- 2004 121 882

## Description

### TECHNICAL FIELD

The present invention relates to a method for improving performance of a motor vehicle. The invention also relates to a computer programme product comprising programme code for a computer for implementing a method according to the invention. The invention also relates to a computer and a motor vehicle, which is equipped with the computer.

### BACKGROUND

There are motor vehicles which are equipped with a motor and transmission having a so called split gear.

Such a vehicle is depicted in EP1101980, US 6 869 377 and US 7 223 204. The depicted vehicle has a motor and a gear box with an input shaft, a main shaft and a lay shaft, wherein operating power is arranged to be transmitted to the input shaft of the gear box wherefrom the operating power in a first split gear is arranged to be transmitted from the input shaft to the lay shaft. In a second split gear the operating power is transmitted to the lay shaft via the main shaft. In a third neutral split gear the operating power is neither transmitted to the lay shaft nor from the input shaft to the main shaft.

Known vehicles are continuously subject of improving of performance. On the competitive market of heavy vehicles it is important for a manufacturer of vehicles to be able to provide vehicles which are robust, in particular in case the vehicles are to be driven in areas having a climate of large temperature differences between different seasons of the year.

### SUMMARY OF THE INVENTION

An object of the invention is to provide a new and advantageous way to improve performance of a motor vehicle.

Another object is to provide a method and a computer programme for improving performance of a motor vehicle.

An object of the invention is to achieve a motor vehicle being able to start up quicker at a cold start.

Another object is to provide a device allowing a method for starting a motor vehicle during cold start, which method requires less energy.

Another object is to provide an alternative method for improving performance of a motor vehicle.

An object of the invention is to provide an alternative method for improving performance of a vehicle during a start up phase of the vehicle.

These objects are achieved by a method for improving performance of a motor vehicle, wherein said method comprises the step according to claim 1.

By affecting the gear box during shut down of the engine, when applicable, in such a way that a neutral split gear is engaged, so that no operational power during start up of the engine is transmitted to one or several lay shafts in the gear box, an improved performance of the motor vehicle is achieved.

By affecting the gear box during start up of the engine, when applicable, in such a way that a neutral split gear is engaged, so that no operational power during start up of the engine is transmitted to one or several lay shafts in the gear box, an improved performance of the motor vehicle is achieved. The term "when applicable" refers to a case wherein a condition specified below is fulfilled, e.g. in a case where a temperature of a lubricant provided in the gear box is below a predetermined temperature and thereby is determined to be too viscous.

Since at least one lay shaft in the gear box in general is embedded in a lubricant, start up of the engine where the lay shaft together with an input shaft has to rotate, may provide unnecessarily high load for the engine of the vehicle. In particular it is energy demanding to rotate a lay shaft in the gear box when the lubricant has high viscosity, such as e.g. at low temperatures. By low temperatures is meant temperatures below 0 degrees Celsius. In particular the inventive method is advantageous in case the temperature of the lubricant is below -10 degrees Celsius.

It is advantageous to, when shutting down or starting up the engine, affect the gear box in such a way that a neutral split gear is engaged, so that no operational power during start up of the engine is transmitted to one or more lay shafts in the gear box, since a start engine of the engine will not be as exposed to heavy load during a up start phase of the vehicle wherein the lubricant is too viscous. Additionally, the risk of using unnecessarily battery energy is reduced using a start engine at a start up phase of the engine of the vehicle during cold start, in particular at low temperatures.

Another advantage of the method according to the invention is that time is gained when starting up the motor having the split gear in a neutral position, since no disengagement of the clutch of the transmission of the vehicle has to be performed.

When shutting down the engine the step of affecting the gear box may be performed on the basis of the step of receiving a command for shutting down the engine. When a desire of a driver or user of the vehicle regarding shutting down the same is received by a control unit in the vehicle engagement of the split gear in the neutral position will be initiated and in applicable cases be completed before the engine is shut down. In this way the split gear in the transmission of the vehicle will be in a neutral position when the engine is cranked up at a later stage.

The step of, when shutting down the engine, affecting the gear box is performed on the basis of the step of detecting a condition, such as temperature or viscosity, of a lubricant provided in said gear box. If the detected condition is implying that the temperature is lower than at certain threshold, rotation of a lay shaft provided in the lubricant at later start up of the engine during a corresponding condition is supposed to be too energy demanding and un-advantageous. Accordingly the split gear of the gear box is set in a neutral position before shutting down the vehicle.

The step of, when shutting down the engine, affecting the gear box, may be performed on the basis of the step of detecting a condition, such as temperature, of air surrounding the motor vehicle. If the detected condition is implying that the temperature is lower than a certain threshold rotation of a lay shaft provided in the lubricant at later start up of the engine, during a corresponding condition, is supposed to be too energy demanding and un-advantageous. Accordingly the split gear of the gear box is then put in a neutral position before shutting down the engine.

According to an embodiment of the invention, when starting up the engine, the step of affecting the gear box, may be performed on the basis of the step of receiving a command for starting up the engine. When a desire of a driver or user of the vehicle regarding starting up the same is received by a control unit in the vehicle engagement of the split gear in the neutral position will be initiated and will in applicable cases be completed before the engine is started up. In this way the split gear in the gear box of the vehicle will be in a neutral position when the engine is cranked up at a later stage.

According to an embodiment of the invention, when starting up the engine, the step of affecting the gear box may be performed on the basis of the step of detecting a condition, such as temperature or viscosity, of a lubricant provided in said gearbox. If the detected condition is implying that the temperature is lower than at certain threshold value, rotation of a lay shaft provided in the lubricant at start up of the engine is supposed to be too energy demanding and un-advantageous. Accordingly, the split gear of the gear box is set in a neutral position before starting up the vehicle.

According to an embodiment of the invention, when starting up the engine, the step of affecting the gear box may be performed on the basis of the step of detecting a condition, such as temperature, of air surrounding the motor vehicle. If the detected condition is implying that the temperature is lower than a certain threshold value rotation of a lay shaft provided in the lubricant at later start up of the engine is supposed to be too energy demanding and un-advantageous. Accordingly, the split gear of the gear box is set in a neutral position before starting up the engine.

The invention also relates to a device according to claim 4. Additional advantageous embodiments are depicted in claims 5-6.

According to an aspect of the invention there is provided a device for improving performance of a motor vehicle comprising an engine and a gear box with an input shaft, a main shaft and at least one lay shaft, wherein operational power is arranged to be transmitted to the input shaft of the gear box, wherein operational power in a first split gear is arranged to be transmitted from the input shaft to the lay shaft, and wherein the operational power in a second split gear is arranged to be transmitted to the lay shaft via the main shaft, wherein the operational power in a third neutral split gear is not transmitted to the lay shaft or the main shaft comprising means for, when shutting down the engine, affecting the gear box in such a way that said third neutral split gear is engaged, so that during start up of the engine no power is transmitted to said lay shaft and main shaft, and sensor means for detecting a condition of a lubricant in said gear box.

An aspect of the invention relates to a motor vehicle comprising a device according to what is depicted above. The motor vehicle may be a truck, a bus or a car.

An aspect of the invention relates to a computer programme according to claim 9. Additional advantageous embodiments are depicted in claims 10-11.

An aspect of the invention relates to a computer programme product according to claim 12.

According to an aspect of the invention there is provided a computer programme for improving performance of a motor vehicle comprising a motor and a gear box with an input shaft, a main shaft and at least one lay shaft, wherein the operating power is arranged to be transmitted to the input shaft of the gear box, wherein the operating power in a first split gear is arranged to be transmitted from the input shaft to the lay shaft, and wherein the operating power in a second split gear is arranged to be transmitted to the lay shaft via the main shaft, wherein the operating power in a third neutral split gear is neither transmitted to the lay shaft nor the main shaft, wherein said computer programme comprises programme code stored on a by a computer readable medium for causing and electronic controlled unit or other computer connected to the electronic control unit to execute the step of:
- when shutting down the engine, affecting the gear box in such a way that said third neutral split gear is engaged, so that during start up of the engine no power is transmitted to said lay shaft and main shaft, wherein the step of affecting the gear box is performed on the basis of the step of: -detecting a condition of a lubricant in said gear box.

The step of, when shutting down the engine, affecting the gear box may be performed on the basis of the step of:
- receiving a command for shutting down the engine.

The step of, when shutting down the engine, affecting the gear box may be performed on the basis of the step of:
- detecting a condition of surrounding air of said motor engine.

Additional objects, advantages and new feature of the present invention will be apparent to the man skilled in the art from the following details, as well as practise of the invention. While the invention is depicted below it should be apparent that the invention is not limited to the specific depicted details. The above mentioned skilled man in the art having access to the teachings herein will recognize additional applications, modifications and incorporations within other areas, which are within the scope of the claims

### BRIEF DESCRIPTION OF THE DRAWINGS

For a more complete understanding of the present invention and additional objects and advantages thereof it is hereby made reference to the following detailed description which should be read together with the accompanying drawings, wherein same reference numbers are associated with like parts in the different drawings, and in which:
Fig. 1 schematically illustrates a vehicle according to an embodiment of the invention;
Fig. 2 schematically illustrates a sub-system of the vehicle shown in Fig. 1, according to an embodiment of the invention;
Fig. 3 schematically illustrates a gear box of the vehicle shown in Fig. 1, according to an embodiment of the invention;
Fig. 4a schematically illustrates a flow chart depicting a method according to an embodiment of the invention;
Fig. 4b schematically illustrates a flow chart depicting a method wherein the advantages of the invention are illustrated compared to prior art;
Fig. 4c schematically illustrates a flow chart depicting a method, according to an embodiment of the invention;
Fig. 4d schematically illustrates a flow chart depicting a method, according to an embodiment of the invention; and
Fig. 5 schematically illustrates a computer, according to an embodiment of the invention.

### DETAILED DESCRIPTION OF THE DRAWINGS

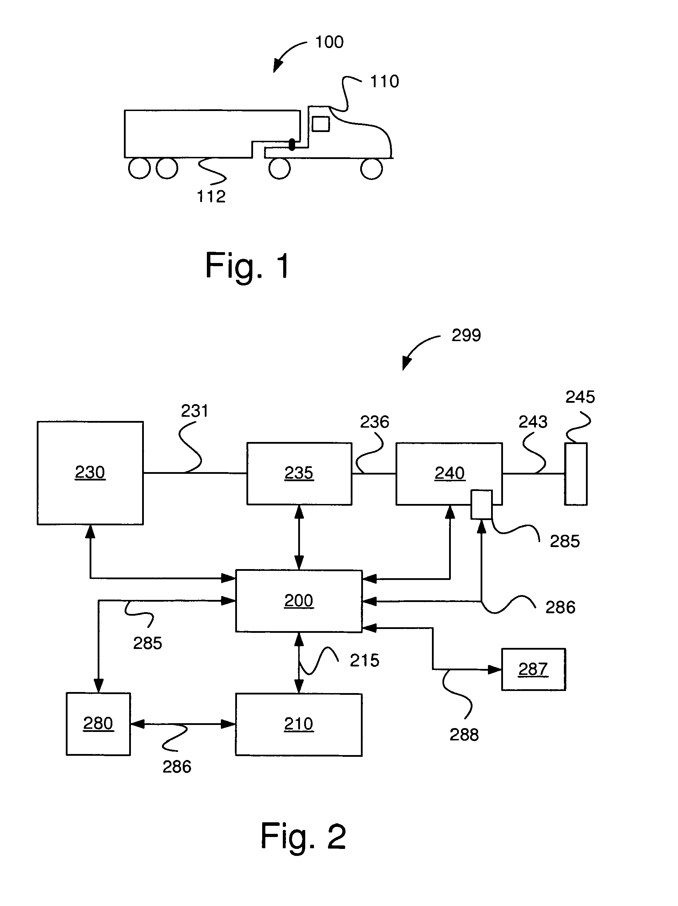

With reference to Fig. 1 there is shown a side view of a vehicle 100. The exemplified vehicle 100 comprises a tractor 110 and a trailer 112. The vehicle may be a heavy vehicle, such as a truck or a bus. The vehicle 100 may alternatively be a private car. The vehicle 100 is a motor vehicle having an automated transmission and split gear.

Herein the term "link" refers to a communication link which can be a physical connection such as an opto-electronic communication wire, or a non-physical connection such as a wireless connection, for example a radio- or microwave link.

Herein the term "operational power" is synonymous with engine torque.

With reference to Fig. 2 there is illustrated a sub system 299 of the vehicle 100. The sub system 299 is arranged in the tractor 110. The sub-system 299 has an engine 230. The engine 230 may be an arbitrary engine, such as for example a combustion engine. The combustion engine 230 may be an engine having six cylinders. The combustion engine 230 may be a diesel engine. The engine 230 has a start motor (not shown) which is arranged to crank up the engine 230 based upon a request by a driver of the vehicle 100. The driver, or another user, may initiate both shutting down and starting up of the engine 230. In particular, the driver may shut down and start up the engine 230 of the vehicle 100 by means of an actuator 280, which is connected to an electronic control unit 200 via a link 285. The actuator 280 may be a device for receiving a start key, or may be a push button, which allows a driver to both start up and shut down the engine 230 in a conventional manner. Of course other types of actuators may be used, e.g. a device which can be controlled by a remote control or by voice. The actuator 280 is arranged to generate a start or shutting down signal and send the signal via the link 285 to the control unit 200. The start- or shut down signal is generated on the basis of an event performed by the driver corresponding to a wish of the driver to start up or shut the down the engine 230, respectively. The start signal is herein referred to as Sstart. The shut down signal is herein referred to as Sstop.

The control unit 200 is arranged to receive the start signal Sstart. The control unit 200 is arranged to receive the shut down signal Sstop. The control unit 200 is arranged to initiate start up of the engine 230 of the vehicle on the basis of the start signal Sstart. The control unit 200 is arranged to initiate shut down of the engine 230 of the vehicle on the basis of the shut down signal Sstop.

The engine 230 has an output shaft 231, which is connected to a clutch 235. The clutch 235 may be of any conventional disc type, such as a multiple disc clutch. The clutch 235 is also connected to a shaft 236. The shaft 236 is an input shaft to a gear box 240. The gear box 240 has an output shaft 243, which is arranged to transmit operational power to a number of wheels 245 of the vehicle 100 in a known manner. The clutch 235 is arranged to interrupt power transmission in the transmission comprising the shaft 231, clutch 235, shaft 236, gear box 240 and shaft 243. The control unit 200 is according to an embodiment arranged to control both the clutch 235 and the gear box 240.

A second control unit 210 is arranged for communication with the control unit 200 via a link 215. The second control unit 210 may be detachably connected to the control unit 200. The second control unit 210 may be an external control unit regarding the vehicle 100. The second control unit 210 may be arranged to perform the method steps according to the invention. The second control unit 210 may be used for loading software to the control unit 200, in particular software for engaging a split gear of the gear box 240 in a neutral position when the vehicle is to be shut down. Alternatively, the second control unit 210 may be used for loading software to the control unit 200, in particular software for engaging a split gear of the gear box 240 in a neutral position when the vehicle is starting up. The second control unit 210 is arranged for communication with the actuator 280 via a link 286.

According to this embodiment the control unit 200 is also arranged to control the engine 230. For this purpose the control unit 200 is signal connected to actuators (not shown), as for example injection valves for injecting fuel to the cylinders of the engine 230. Of course separate control units for the engine 230 and gear box 240, respectively, may be arranged. However these should in that case be connected so as to be able to communicate relevant information there between.

A first condition sensor 285 is arranged at the gearbox 240 to detect a first condition of a lubricant provided in the gear box 240. The first condition sensor 285 is arranged to communicate a signal representative of the condition of the lubricant via a link 286 to the control unit 200. The first condition may be any of temperature of the lubricant, viscosity of the lubricant or any other parameter allowing determining the state of the lubricant. In the case the viscosity of the lubricant is exceeding a predetermined value the innovative method according to the invention is particularly suitable. In case the temperature of the lubricant is below a predetermined value the innovative method according to the invention is particularly suitable. I.e. when the lubricant has a certain temperature or viscosity it is preferred to, when shutting down the engine, affecting the gear box 240 in such a way that a neutral split gear is provided, so that when cranking up the engine 230 at a later stage no operational power is transmitted to one or more lay shafts or the main shaft of the gear box 240. According to an alternative embodiment, when the lubricant has a certain temperature or viscosity it is preferred to, when starting up the engine, affecting the gear box 240 in such a way that a neutral split gear is provided, so that when cranking up the engine 230 at a later stage no operational power is transmitted to one or more lay shafts or the main shaft of the gear box 240.

A second condition sensor 287 is arranged to detect a first external condition of the vehicle 100. The second condition sensor 287 is arranged to communicate a signal representative of the external condition via a link 288 to the control unit 200. The second condition may be temperature of air surrounding the vehicle or any other parameter allowing determination of a state of the lubricant. In the case the viscosity of the lubricant is exceeding a predetermined value the innovative method according to the invention is particularly suitable.

In case the temperature of the lubricant is lower than a predetermined value the inventive method according to the invention is particularly suitable. I.e. when the surrounding air has a certain temperature it may be advantageous to, when shutting down the engine 230, affect the gear box 240 in such a way that a neutral split gear is set, such that when cranking up the engine 230 no operational power is transmitted to one or more lay shafts or the main shaft of the gear box 240. According to an embodiment of the invention, when the surrounding air has a certain temperature it may be advantageous to, when starting up the engine 230, affect the gear box 240 in such a way that a neutral split gear is set, such that when cranking up the engine 230 no power is transmitted to one or more lay shafts or the main shaft of the gear box 240.

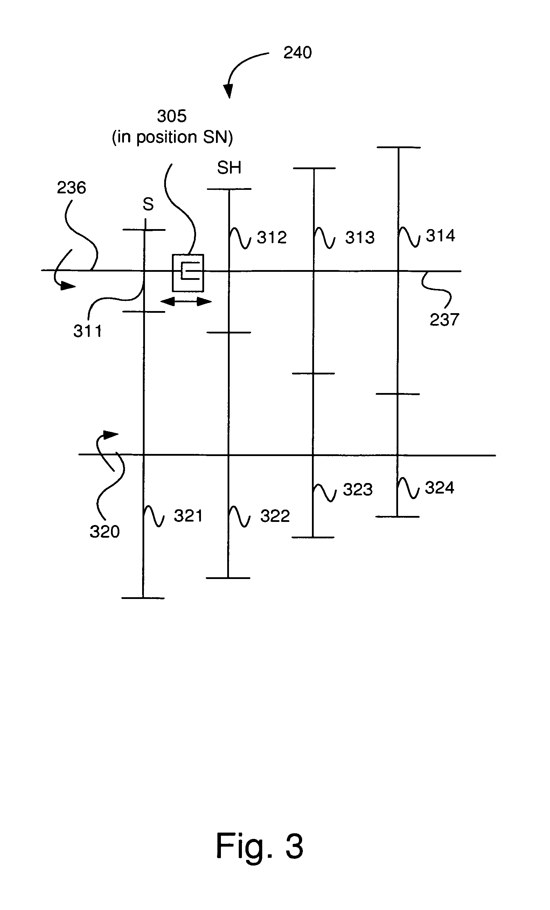

Fig. 3 schematically illustrates a view of a transmission of the vehicle shown in Fig. 1 according to an embodiment of the invention.

The transmission comprises an input shaft 236, a main shaft 237 and a lay shaft 320. The input shaft 236 according to this example is arranged to support a detachable gear wheel 311 so as to achieve different gear changing steps. The main shaft 237 is arranged to support detachable gear wheels 312, 313, and 314 for different gear changing steps. The lay shaft 320 is arranged to support fixed attached gear wheels 321, 322, 323 and 324. Hereby the operational power from the engine 230 of the vehicle 100 is arranged to be transmitted to the input shaft 236 of the transmission wherefrom it in a first split gear is changed over from the gear wheel 311 to the gear wheel 321 on the lay shaft 320 and from the lay shaft 230 the power is transmitted to the main shaft 237 and via the main shaft 237 and the output shaft 243 (see Fig. 2) for operating the drive wheels of the vehicle. In a second split gear the operational power is transmitted from the input shaft 236 to the gear wheel 312, whereby the gear wheel 312 is powering the lay shaft 320 from which the operational power is transmitted to the main shaft 237 and via the main shaft 237 and the output shaft 243 (see Fig. 2) on to for operating the drive wheels of the vehicle.

The first gear wheel 311 is rotatable mounted on the input shaft 236 and is lockable on the input shaft 236 by means of a sleeve 305. The second gear wheel 312 is rotatable mounted on the main shaft 237 and lockable on the input shaft 236 by means of the sleeve 305. The sleeve 305 is non-rotatable mounted on the shaft 236 and the shaft 237. The sleeve 305 is movable in the longitudinal direction of the input shaft and the main shaft 237. The first gear wheel 311 is in a fixed position when the sleeve 305 is moved to a first end position to the left in Fig. 3. In this state the operational power from the engine 230 is transferred via the input shaft 236 and the first gear wheel 311 to the first gear wheel 321 being fixed mounted on a lay shaft 320. In a similar way, the second gear wheel 312 is in its fixed position when the sleeve 305 is moved to a second end position to the right in Fig. 3. In this state the operational power from the engine 230 may be transmitted via the input shaft 236 and the second gear wheel 312 to the second gear wheel 322 which is fixed mounted on the lay shaft 320.

The sleeve 305 may be moved by means of actuation means (now shown). The actuation means may be controlled by air pressure. The sleeve is also provided by synchronization means known in prior art.

In a state where the operational power of the engine 230 may be transmitted via the first gear wheel 311 it is said that a low split gear is in position. This state is also referred to as a first split gear. This state is indicated by the reference number SL in Fig. 3. In a state where the operational power of the engine 230 may be transmitted via the second gear wheel 312 it is said that a high split gear is in position. This state is also referred to as a second split gear. This state is indicated by the reference number SH in Fig. 3.

In a state where the sleeve 305 is in an intermediate position it is said that a split gear is in a neutral position. This state is also referred to as a neutral split gear. This state is indicated by the reference number SN in Fig. 3. In Fig. 3 the sleeve is illustrated being in the intermediate position SN. In this position SN no operational power from the engine 230 may be transmitted to the lay shaft 320 via any of the gear wheels 311 or 312.

The main shaft 320 of the gearbox is also provided with a third gear wheel 313 and a fourth gear wheel 314, which are arranged to in a certain state of the gear box 240 transmit the operational power of the engine 230 to the at lay shaft 320 arranged gear wheels 324 and 325, respectively. These are depicted herein in no further detail.

The gear box 240 is provided in a house. In the house there is provided lubricant, such as for example lubricating oil, which is in contact with at least a part of the lay shaft 320. According to one embodiment the lay shaft 320 is embedded in the lubricant. Typically the lubricant is surrounding the lay shaft 320. The viscosity of the lubricant is temperature dependent, which means that a lubricant in general becomes more viscous at low temperatures. So as to avoid that the lay shaft 320 is required to be pulled when cranking up the engine 230 it is detached at shut down of the engine 230. Alternatively, so as to avoid that the lay shaft 320 is required to be pulled when cranking up the engine 230 it is detached when starting up of the engine 230.

The control unit 200, as illustrated with reference to Fig. 2 above, is configured to at initiation of the shut down of the engine 230 determine whether the split gear of the gear box 240 is in a neutral position or not, i.e. whether the sleeve 305 is in the intermediate position SN or not. If the split gear of the gear box 240 is not in a neutral position the control unit 200 is controlling the sleeve 305 to the intermediate position SN (i.e. providing the split gear in the neutral position before the vehicle, among other components the engine 230, is shut down). This gives that the lay shift 320 not will be rotated when cranking up the engine 230 at a later time point, which is very advantageous at cold starts of the engine 230 at low temperatures.

According to one embodiment of the invention the control unit 200, as illustrated with reference to Fig. 2 above, is configured to at initiation of start up of the engine 230 determine whether the split gear of the gear box 240 is in a neutral position or not, i.e. whether the sleeve 305 is in the intermediate position SN or not. If the split gear of the gear box 240 is not in a neutral position the control unit 200 is controlling the sleeve 305 to the intermediate position SN, i.e. providing the split gear in the neutral position before the engine 230 is cranked up. This gives that the lay shift 320 will not be rotated when cranking up the engine 230 at a later time point, which is very advantageous at cold starts of the engine at low temperatures.

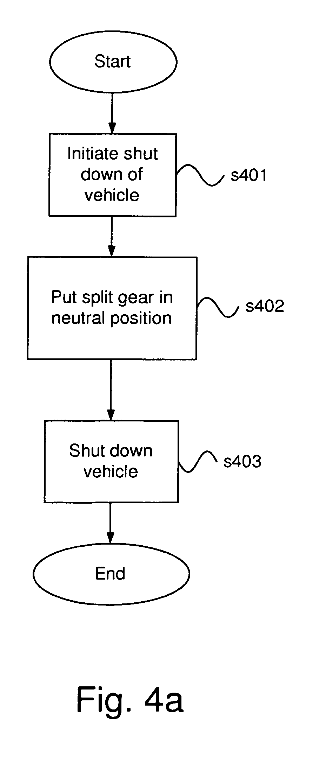

Fig. 4a schematically illustrates a flow chart according to an embodiment of the invention.

In a first method step s401 a user for example the driver of the vehicle 100 is initiating shut down of the motor vehicle. In particular, this means that the engine 230 of the vehicle 100 should be shut down. The shut down of the engine 230 may for example be performed by means of actuators, such as a push button or a key and a corresponding element for the key. When the user of the vehicle 100 is using the actuator it is indicated that there is a desire to shut down the engine of the vehicle 100. After the step s401 a subsequent step s402 is performed.

In the step s402 the split gear of the gear box 240 of the vehicle 100 is put in a neutral position. This means that the sleeve 305 illustrated with reference to Fig. 3 is in the intermediate position SN. This means, as depicted above, that the lay shaft 320 will not be rotated at a later crank up of the engine 230 of the vehicle 100. It should be noted that if the gear box 240 of the vehicle 100 could be configured with more than one lay shaft, such as an intermediate shaft, wherein this one should also be disconnected during the shut down of the engine 230 of the vehicle 100 so as to achieve the advantages provided by of the present invention. In general, the parts of the gear box 240 of the vehicle 100 which are applicable are detached during the shut down of the engine 230 so as to achieve the advantages provided by the present invention. After the step s402 a subsequent step s403 is performed.

In the step s403 the vehicle is shut down. This means for example that the injection of fuel in cylinders of the engine 230 is stopped. Shut down of the engine 230 may comprise a multiplicity of different sub steps. After the step s403 the method ends.

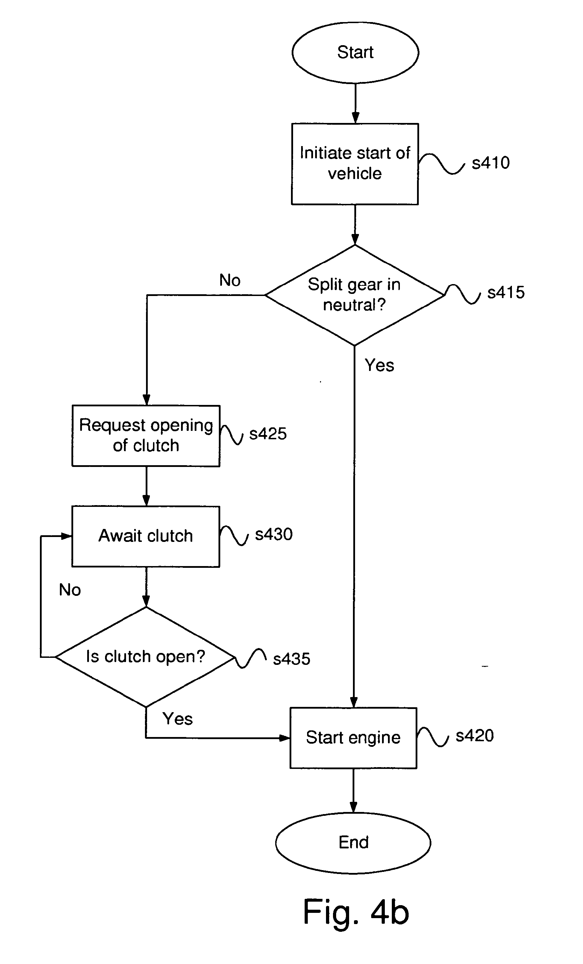

Fig. 4b schematically illustrates a flow chart where advantages of the invention over prior art is clear.

In a first method step s410 the driver of the vehicle 100 initiates start of the same. This may be performed by means of an actuator, such as a push button or a key and a corresponding element for the key, indicating that there is a desire to start the engine 230 of the vehicle 100. After the step s410 a subsequent step s415 is performed.

After initiating a start of the vehicle 100 in method step s410 there is determined in the step s415 whether a split gear in the gear box 240 of the vehicle 100 is in a neutral position or not. If the split gear in the gear box 240 of the vehicle 100 is in a neutral position this means, according to one embodiment, that the sleeve 305 illustrated with reference to Fig. 3 is in the intermediate position SN. This means, as depicted above, that the lay shaft 320 will not rotate when cranking up the engine 230 of the vehicle 100. If the split gear in the gear box 240 of the vehicle 100 is determined to be in a neutral position there is performed a subsequent method step s420. If the split gear in the gear box 240 of the vehicle 100 is determined not to be in a neutral position a subsequent method step s425 is performed.

In method step s420 the engine 230 of the vehicle 100 starts. In this step there is used the start motor of the vehicle 100 so as to crank up the engine 230 of the vehicle 100 without that the lay shaft 320 of the gear box 240 needs to rotate in a viscous lubricant, such as a lubricating oil. After the method step s420 the method ends.

In the method step s425 it is requested an opening of the clutch 235 of the transmission. This request may be generated in the control unit 200. After the step s425 a subsequent step s430 is performed.

In the step s430 and a subsequent determining step s435 it is waited for a time point when the clutch 235 in the transmission of the vehicle 100 is determined to be open. This may be a state wherein the clutch 235 is substantially open or completely open. If the clutch 235 of the transmission of the vehicle 100 is determined to be open it is performed the subsequent step s420 as depicted above. After the method step s420 the method ends.

It is hereby clear that the engine 230 of the vehicle 100 may be cranked up faster if the split gear in the gear box 240 in the vehicle 100 already is in a neutral position when initiating start of the vehicle 100. In case that the step s415 determined that the split gear in the gear box 240 of the vehicle 100 is not in a neutral position the step s425, s430 and s435 will be performed before the engine 230 cranks up.

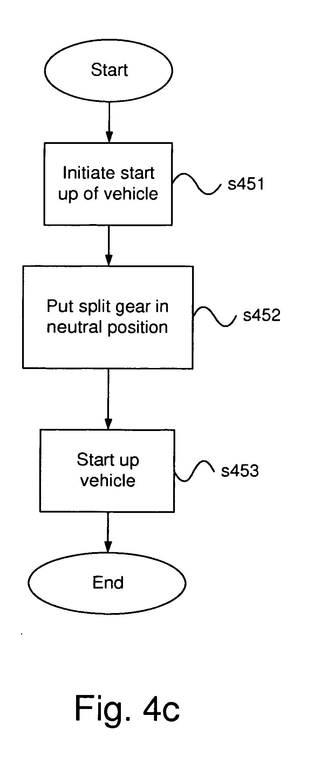

Fig. 4c schematically illustrates a flow chart according to an embodiment of the invention.

In a first method step s451 a user for example the driver of the vehicle 100 is initiating start up of the motor vehicle. In particular this means that the engine of the vehicle is about to be started. The start up of the engine 230 may for example be performed by means of actuators, such as a push button or a key and a corresponding element for the key. When the user of the vehicle 100 is using the actuator it is indicated that there is a desire to start up the engine 230 of the vehicle. After the step s451 a subsequent step s452 is performed.

In the step s452 the split gear of the gear box 240 of the vehicle 100 is put in a neutral position. This means that the sleeve 305 illustrated with reference to Fig. 3 is in the intermediate position SN. This means, as depicted above, that the lay shaft 320 will not be rotated at a later start up of the engine 230 of the vehicle 100. It should be noted that if the gear box 240 of the vehicle 100 is configured with more than one lay shaft, such as an intermediate shaft, this one should also be disconnected during the start up of the engine of the vehicle 100 so as the achieve the advantages provided by the present invention. In general, the parts of the gear box 240 of the vehicle 100 which are applicable are detached during the start up of the engine 230 so as to achieve the advantages provided by the present invention. After the step s452 a subsequent step s453 is performed.

In the step s453 the vehicle 100 is started up. This means for example that the injection of fuel in cylinders of the engine 230 is started. Start up of the engine 230 may comprise a multiplicity of different sub steps. After the step s453 the method ends.

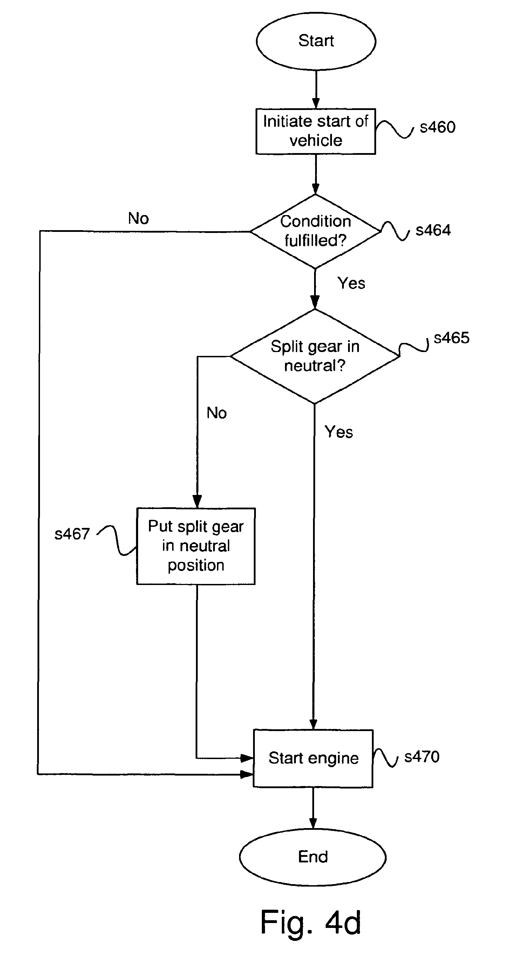

Fig. 4d schematically illustrates a flow chart depicting a method according to an aspect of the invention.

In a first method step s460 the driver of the vehicle 100 initiates start of the same. This may be performed by means of an actuator, such as a push button or a key and a corresponding element for the key, indicating that there is a desire to start the engine 230 of the vehicle 100. After the step s460 a subsequent step s464 is performed.

In the step s464 there is determined whether a condition is fulfilled or not. The condition may relate to a temperature of the lubricant of the gear box 240. The condition may be determined in various ways. According to one example the condition is fulfilled if the temperature of the lubricant is below a predetermined temperature, such as -10 degrees Celsius, indicating that the lubricant is too viscous. Herein the invention is applicable in a case wherein the condition is fulfilled.

If it is determined that that the condition is fulfilled a subsequent step s465 is performed. If it is determined that the condition is not fulfilled a subsequent step s470 is performed.

In the step s465 there is determined whether a split gear in the gear box 240 of the vehicle 100 is in a neutral position or not. If the split gear in the gear box 240 of the vehicle 100 is in a neutral position this means, according to one embodiment, that the sleeve 305 illustrated with reference to Fig. 3 is in the intermediate position SN. This means, as depicted above, that the lay shaft 320 will not rotate when cranking up the engine 230 of the vehicle 100. If the split gear in the gear box 240 of the vehicle 100 is determined to be in a neutral position there is performed a subsequent method step s470. If the split gear in the gear box 240 of the vehicle 100 is determined not to be in a neutral position a subsequent method step s467 is performed.

In method step s467 the split gear in the gear box 240 of the vehicle 100 is put in a neutral position. After the step s467 the step s470 is performed.

In method step s470 the engine 230 of the vehicle 100 starts. In this step there is used the start motor of the vehicle 100 so as to crank up the engine 230 of the vehicle 100 without that the lay shaft 320 of the gear box 240 needs to rotate in a too viscous lubricant, such as lubricating oil. After the method step s470 the method ends.

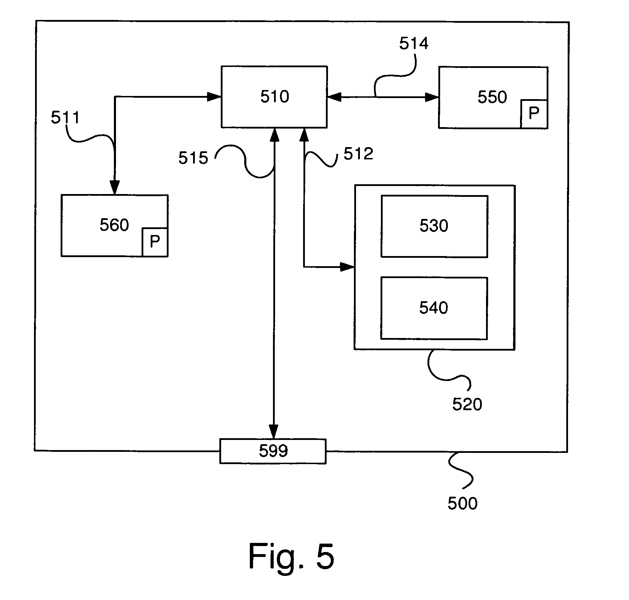

According to Fig. 5 there is shown a diagram of an embodiment of a device 500. The device 500 is also referred to as a control unit which is depicted with reference to Fig. 2. The above mentioned control unit 200 may be comprise a device 500. The device 500 comprises a non volatile memory 520, a data processing unit 510 and a read/write memory 550. The non volatile memory 520 has a first memory portion 530 wherein a computer programme, such as an operative system, is stored to control the function of the device 500. Further the device 500 comprises a buss-controller, a serial communication port, I/O-units, an A/D-converter, a time- and date input and transfer unit, an event counter and an interruption controller (not shown). The non volatile memory 520 also has a second memory portion 540.

In a memory in the device 200 there is provided a computer programme P comprising routines for when shutting down or cranking up the engine 230, when applicable, affecting the gearbox 240 in such a way that a third neutral split gear is initiated, so such that when cranking up the engine 230 no operational power is transmitted to any lay shaft. The programme may be stored in an executive manner or at a compressed state in a memory 560 and/or in a read/write memory 550. The device 500 may for example be a micro processor.

When it is depicted that the data processing unit 510 is performing a certain function it should be understood that the data processing unit 510 is performing a certain part of the programme P, which is in stored in the memory 560, or a certain part of the programme which is stored in read/write memory 550.

The data processing unit 510 can communicate with a data port 590 via a data buss 515. The non volatile memory 520 is arranged for communication with the data processing unit 510 via a data buss 512. The separate memory 560 is arranged for communication with the data processing unit 510 via a data buss 511. Read/write memory 550 is arranged for communication with the data processing unit 510 via a data buss 514.

When data is received on the data port 599 it is temporarily stored in the second memory portion 540. When received data temporarily has been stored the data processing unit 510 is arranged to perform execution of code on a manner depicted above. According to an embodiment information signals received on the data port 599 comprises information about that the driver wish to initiate shut down or up start of the vehicle. Additionally signals comprising information about current temperature of the lubricant of the gear box 240 in the vehicle 100 and/or current temperature of the surrounding air of the vehicle may be provided to the device via the data port 599. This information may be used of the device 500 so as to, when shutting down or starting up the engine 230, when applicable, affecting the gear box in a way so that a third neutral split gear is initiated, such that when cranking up the engine 230 no operational power is transmitted to said lay shaft.

Parts of the method depicted herein may be performed by the device 500 by means of the data processing unit 510 running the programme stored in the memory 560 or read/ write memory 550. When the device 500 runs the programme the method for improving performance depicted herein is executed.

The foregoing description of the preferred embodiment of the present invention has been provided in the purpose of illustration and depiction only. It is not intended to be comprehensive or to limit the invention to the depicted different alternatives. Alternative many modifications and variations will be apparent to the person skilled in the art. The embodiments were chosen and depicted to best explain the principle of the invention and its practical applications, and thereby make it possible for a person skilled in the art to understand the invention for different embodiments and with the different modifications which are applicable for the intended use.

## Claims

1. Method for improving performance of a motor vehicle (100) comprising an engine (230) and a gear box (240) with an input shaft (236), a main shaft (237) and at least one lay shaft (320), whereby operational power is arranged to be transmitted to the input shaft (236) of the gearbox (240), wherein operational power in a first split gear (SL) is arranged to be transmitted from the input shaft (236) to the lay shaft (320),
and wherein the operational power in a second split gear (SH) is arranged to be transmitted to the lay shaft (320) via the main shaft (237), wherein the operational power in a third neutral split gear (SN) is not transmitted to the lay shaft (320) or the main shaft (237),
**characterized by** the step of:
- when starting up the engine, when applicable, affecting the gear box (240) in a way such that said third neutral split gear (SN) is engaged, so that no operational power is transmitted to the lay shaft (320) and the main shaft (237),
wherein the step of affecting the gear box (240) is performed on the basis of the step of:
- detecting a condition of a lubricant in said gear box (240).

2. Method according to claim 1, wherein the step of affecting the gear box (240) is performed on the basis of the step of:
- receiving a command (Sstart) for starting up the engine (230).

3. Method according to claim 1 or 2, wherein the step of affecting the gear box (240) is performed on the basis of the step of:
- detecting a condition of surrounding air of said vehicle (100).

4. Device for improving performance of a motor vehicle (100) comprising an engine (230) and a gear box (240) with an input shaft (236), a main shaft (237) and at least one lay shaft (320), wherein operational power is arranged to be transmitted to the input shaft (236) of the gear box (240), wherein operational power in a first split gear (SL) is arranged to be transmitted from the input shaft (236) to the lay shaft (320), and wherein the operational power in a second split gear (SH) is arranged to be transmitted to the lay shaft (320) via the main shaft (237), wherein the operational power in a third neutral split gear (SN) is not transmitted to the lay shaft (320) or the main shaft (237) **characterized by** means for, when starting up the engine (230), when applicable, affecting the gearbox (240) in such a way that said third neutral split gear (SN) is engaged, so that no operational power is transmitted to the lay shaft (320) and the main shaft (237), and sensor means (285) for detecting a condition of a lubricant in said gear box (240).

5. Device according to claim 4, comprising means for receiving a command (sStart) for starting up the engine (230).

6. Device according to claim 4 or 5, comprising sensor means (287) for detecting a condition of surrounding air of said motor vehicle (100).

7. Motor vehicle (100) comprising a device according to any of claims 4-6.

8. Motor vehicle (100) according to claim 7, wherein said vehicle is a truck, bus or private car.

9. Computer programme (P) for improving performance of a motor vehicle (100) comprising an engine (230) and a gearbox (240) with an input shaft (236), a main shaft (237) and at least one lay shaft (320), wherein the operating power is arranged to be transmitted to the input shaft (236) of the gearbox (240), wherein the operating power in a first split gear (SL) is arranged to be transmitted from the input shaft (236) to the lay shaft (320), and wherein the operating power in a second split gear (SH) is arranged to be transmitted to the lay shaft (320) via the main shaft (237), wherein the operating power in a third neutral split gear (SN) is not transmitted to the lay shaft (320) or the main shaft (237), wherein said computer programme comprises programme code stored on a by a computer readable medium (550, 560) for causing an electronic control unit (200) or another computer (210, 500) connected to the electronic control unit (200) to perform the step of:
- when starting up the engine, when applicable, affecting the gear box (240) in a way such that said third neutral split gear (SN) is engaged, so that no operational power is transmitted to the lay shaft (320) and the main shaft (237),
wherein the step of affecting the gear box is performed on the basis of the step of:
- detecting a condition of a lubricant in said gearbox (240).

10. Computer programme according to claim 9, wherein the step of affecting the gear box is performed on the basis of the step of:
- receiving a command (Sstart) for starting up the engine (230).

11. Computer programme according to claim 9 or 10, wherein in the step of affecting the gear box is performed on the basis of the step of:
- detecting a condition of surrounding air of the vehicle (100).

12. Computer programme product comprising programme code stored on a by a computer readable medium for performing the method steps according to claims 1-3, when said computer programme is run on a electronic control (200) unit or another computer (210) connected to the electronic control unit (200).

## Patentansprüche

1. Verfahren zum Verbessern der Leistung eines Kraftfahrzeugs (100), umfassend einen Motor (230) und ein Getriebe (240) mit einer Eingangswelle (236), einer Hauptwelle (237) und wenigstens einer Vorgelegewelle (320), wobei Betriebsleistung auf die Eingangswelle (236) des Getriebes (240) übertragbar ist, wobei in einem ersten Splitgang (SL) Betriebsleistung von der Eingangswelle (236) auf die Vorgelegewelle (320) übertragbar ist, und wobei in einem zweiten Splitgang (SH) Betriebsleistung auf die Vorgelegewelle (320) mittels der Hauptwelle (237) übertragbar ist, wobei in einem dritten neutralen Splitgang (SN) die Betriebsleistung nicht auf die Vorgelegewelle (320) oder die Hauptwelle (237) übertragen wird, **gekennzeichnet durch** den Schritt:
- Beeinflussen des Getriebes (240) beim Anlassen des Motors, wenn anwendbar, derart, dass der dritte neutrale Splitgang (SN) eingelegt wird, so dass keine Betriebsleistung auf die Vorgelegewelle (320) und die Hauptwelle (237) übertragen wird, wobei der Schritt des Beeinflussens des Getriebes (240) basierend auf dem Schritt ausgeführt wird:
- Erfassen eines Zustandes eines Schmiermittels in dem Getriebe (240).

2. Verfahren nach Anspruch 1,
wobei der Schritt des Beeinflussens des Getriebes (240) basierend auf dem Schritt ausgeführt wird:
- Erhalten eines Befehls (Sstart) zum Anlassen des Motors (230).

3. Verfahren nach Anspruch 1 oder 2,
wobei der Schritt des Beeinflussens des Getriebes (240) basierend auf dem Schritt ausgeführt wird:
- Erfassen eines Zustandes von Umgebungsluft des Fahrzeugs (100).

4. Vorrichtung zum Verbessern der Leistung eines Kraftfahrzeugs (100), umfassend einen Motor (230) und ein Getriebe (240) mit einer Eingangswelle (236), einer Hauptwelle (237) und wenigstens einer Vorgelegewelle (320), wobei Betriebsleistung auf die Eingangswelle (236) des Getriebes (240) übertragbar ist, wobei in einem ersten Splitgang (SL) Betriebsleistung von der Eingangswelle (236) auf die Vorgelegewelle (320) übertragbar ist, und wobei in einem zweiten Splitgang (SH) Betriebsleistung auf die Vorgelegewelle (320) mittels der Hauptwelle (237) übertragbar ist, wobei in einem dritten neutralen Splitgang (SN) die Betriebsleistung nicht auf die Vorgelegewelle (320) oder die Hauptwelle (237) übertragen wird,
**gekennzeichnet durch** Mittel zum Beeinflussen des Getriebes (240) beim Anlassen des Motors, wenn anwendbar, derart, dass der dritte neutrale Splitgang (SN) eingelegt wird, sodass keine Betriebsleistung auf die Vorgelegewelle (320) und die Hauptwelle (237) übertragen wird, und Sensormittel (285) zum Erfassen eines Zustandes eines Schmiermittels in dem Getriebe (240).

5. Vorrichtung nach Anspruch 4,
umfassend Mittel zum Erhalten eines Befehls (Sstart) zum Anlassen des Motors (230).

6. Vorrichtung nach Anspruch 4 oder 5,
umfassend Sensormittel (287) zum Erfassen eines Zustandes von Umgebungsluft des Fahrzeugs (100).

7. Kraftfahrzeug (100),
umfassend eine Vorrichtung nach einem der Ansprüche 4 bis 6.

8. Kraftfahrzeug (100) nach Anspruch 7,
wobei das Fahrzeug ein LKW, Bus oder Personenkraftwagen ist.

9. Computerprogramm (P) zum Verbessern der Leistung eines Kraftfahrzeugs (100), umfassend einen Motor (230) und ein Getriebe (240) mit einer Eingangswelle (236), einer Hauptwelle (237) und wenigstens einer Vorgelegewelle (320), wobei Betriebsleistung auf die Eingangswelle (236) des Getriebes (240) übertragbar ist, wobei in einem ersten Splitgang (SL) Betriebsleistung von der Eingangswelle (236) auf die Vorgelegewelle (320) übertragbar ist, und wobei in einem zweiten Splitgang (SH) Betriebsleistung auf die Vorgelegewelle (320) mittels der Hauptwelle (237) übertragbar ist, wobei in einem dritten neutralen Splitgang (SN) die Betriebsleistung nicht auf die Vorgelegewelle (320) oder die Hauptwelle (237) übertragen wird, wobei das Computerprogramm Programmcode umfasst, der auf einem von einem Computer lesbaren Medium (550, 560) gespeichert ist, um eine elektronische Steuereinheit (200) oder einen anderen mit der elektronischen Steuereinheit (200) verbundenen Computer (210, 500) zu veranlassen, die folgenden Schritte auszuführen:
- Beeinflussen des Getriebes (240) beim Anlassen des Motors, wenn anwendbar, derart, dass der dritte neutrale Splitgang (SN) eingelegt wird, sodass keine Betriebsleistung auf die Vorgelegewelle (320) und die Hauptwelle (237) übertragen wird, wobei der Schritt des Beeinflussens des Getriebes (240) basierend auf dem Schritt ausgeführt wird:
- Erfassen eines Zustandes eines Schmiermittels in dem Getriebe (240).

10. Computerprogramm nach Anspruch 9,
wobei der Schritt des Beeinflussens des Getriebes (240) basierend auf dem Schritt ausgeführt wird:
- Erhalten eines Befehls (Sstart) zum Anlassen des Motors (230).

11. Computerprogramm nach Anspruch 9 oder 10,
wobei der Schritt des Beeinflussens des Getriebes (240) basierend auf dem Schritt ausgeführt wird:
- Erfassen eines Zustandes von Umgebungsluft des Fahrzeugs (100).

12. Computerprogrammprodukt,
umfassend Programmcode, der auf einem von einem Computer lesbaren Medium (550, 560) gespeichert ist, um die Verfahrensschritte nach Anspruch 1 bis 3 auszuführen, wenn das Computerprogramm auf einer elektronischen Steuereinheit (200) ausgeführt wird oder auf einem anderen mit der elektronischen Steuereinheit (200) verbundenen Computer (210).

## Revendications

1. Procédé d'amélioration des performances d'un véhicule à moteur (100) comprenant un moteur (230) et une boîte de vitesse (240) ayant un arbre d'entrée (236), un arbre principal (237) et au moins un arbre intermédiaire (320), dans lequel une puissance de fonctionnement est destinée à être transmise à l'arbre d'entrée (236) de la boîte de vitesse (240), dans lequel la puissance de fonctionnement est destinée, dans un premier rapport intermédiaire (SL), à être transmise de l'arbre d'entrée (236) à l'arbre intermédiaire (320), et dans lequel la puissance de fonctionnement est destinée, dans un deuxième rapport intermédiaire (SH), à être transmise à l'arbre intermédiaire (320) via l'arbre principal (237), la puissance de fonctionnement, dans un troisième rapport intermédiaire neutre (SN), n'étant pas transmise à l'arbre intermédiaire (320) ou à l'arbre principal (237),
**caractérisé par** l'étape consistant :
- au démarrage du moteur, lorsque cela s'applique, à agir sur la boîte de vitesse (240) de telle sorte que ledit troisième rapport intermédiaire neutre (SN) soit engagé, afin qu'aucune puissance de fonctionnement ne soit transmise à l'arbre intermédiaire (320) et à l'arbre principal (237),
l'étape consistant à agir sur la boîte de vitesse (240) étant effectuée sur la base de l'étape consistant à :
- détecter une condition d'un lubrifiant dans ladite boîte de vitesse (240).

2. Procédé selon la revendication 1, dans lequel l'étape consistant à agir sur la boîte de vitesse (240) est effectuée sur la base de l'étape consistant à :
- recevoir une commande (Sstart) pour le démarrage du moteur (230).

3. Procédé selon la revendication 1 ou 2, dans lequel l'étape consistant à agir sur la boîte de vitesse (240) est effectuée sur la base de l'étape consistant à :
- détecter une condition de l'air environnant ledit véhicule (100).

4. Dispositif pour l'amélioration des performances d'un véhicule à moteur (100) comprenant un moteur (230) et une boîte de vitesse (240) ayant un arbre d'entrée (236), un arbre principal (237) et au moins un arbre intermédiaire (320), dans lequel une puissance de fonctionnement est destinée à être transmise à l'arbre d'entrée (236) de la boîte de vitesse (240), dans lequel la puissance de fonctionnement est destinée, dans un premier rapport intermédiaire (SL), à être transmise de l'arbre d'entrée (236) à l'arbre intermédiaire (320), et dans lequel la puissance de fonctionnement est destinée, dans un deuxième rapport intermédiaire (SH), à être transmise à l'arbre intermédiaire (320) via l'arbre principal (237), la puissance de fonctionnement, dans un troisième rapport intermédiaire neutre (SN), n'étant pas transmise à l'arbre intermédiaire (320) ou à l'arbre principal (237), **caractérisé par** des moyens permettant, au démarrage du moteur (230), lorsque cela s'applique, d'agir sur la boîte de vitesse (240) de telle sorte que ledit troisième rapport intermédiaire neutre (SN) soit engagé, afin qu'aucune puissance de fonctionnement ne soit transmise à l'arbre intermédiaire (320) et à l'arbre principal (237), et des moyens capteurs (285) pour détecter une condition d'un lubrifiant dans ladite boîte de vitesse (240).

5. Dispositif selon la revendication 4, comprenant des moyens pour recevoir une commande (Sstart) pour le démarrage du moteur (230).

6. Dispositif selon la revendication 4 ou 5, comprenant des moyens capteurs (287) pour détecter une condition de l'air environnant ledit véhicule à moteur (100).

7. Véhicule à moteur (100) comprenant un dispositif selon l'une quelconque des revendications 4 à 6.

8. Véhicule à moteur (100) selon la revendication 7, dans lequel ledit véhicule est un camion, un autobus ou un autocar privé.

9. Programme informatique (P) pour l'amélioration des performances d'un véhicule à moteur (100) comprenant un moteur (230) et une boîte de vitesse (240) ayant un arbre d'entrée (236), un arbre principal (237) et au moins un arbre intermédiaire (320), dans lequel la puissance de fonctionnement est destinée à être transmise à l'arbre d'entrée (236) de la boîte de vitesse (240), dans lequel la puissance de fonctionnement est destinée, dans un premier rapport intermédiaire (SL), à être transmise de l'arbre d'entrée (236) à l'arbre intermédiaire (320), et dans lequel la puissance de fonctionnement est destinée, dans un deuxième rapport intermédiaire (SH), à être transmise à l'arbre intermédiaire (320) via l'arbre principal (237), la puissance de fonctionnement, dans un troisième rapport intermédiaire neutre (SN), n'étant pas transmise à l'arbre intermédiaire (320) ou à l'arbre principal (237), dans lequel ledit programme informatique comprend un code programme stocké sur un support lisible par ordinateur (550, 560), destiné à faire effectuer à une unité de commande électronique (200) ou un autre ordinateur (210, 500) connecté à l'unité de commande électronique (200), l'étape consistant :
- au démarrage du moteur, lorsque cela s'applique, à agir sur la boîte de vitesse (240) de telle sorte que ledit troisième rapport intermédiaire neutre (SN) soit engagé, afin qu'aucune puissance de fonctionnement ne soit transmise à l'arbre intermédiaire (320) et à l'arbre principal (237),
l'étape consistant à agir sur la boîte de vitesse étant effectuée sur la base de l'étape consistant à :
- détecter une condition d'un lubrifiant dans ladite boîte de vitesse (240).

10. Programme informatique selon la revendication 9, dans lequel l'étape consistant à agir sur la boîte de vitesse (240) est effectuée sur la base de l'étape consistant à :
- recevoir une commande (Sstart) pour le démarrage du moteur (230).

11. Programme informatique selon la revendication 9 ou 10, dans lequel l'étape consistant à agir sur la boîte de vitesse est effectuée sur la base de l'étape consistant à :
- détecter une condition de l'air environnant ledit véhicule (100).

12. Produit de programme informatique comprenant un code programme stocké sur un support lisible par ordinateur, destiné à faire effectuer les étapes de procédé selon les revendications 1 à 3, lorsque ledit programme informatique est exécuté sur une unité de commande électronique (200) ou un autre ordinateur (210) connecté à l'unité de commande électronique (200).
